# EUROPEAN PATENT SPECIFICATION

(11) **EP 0 423 365 B1**
(45) Date of publication and mention of the grant of the patent: **09.02.1994**
(21) Application number: 90906349.7
(22) Date of filing: 20.04.1990
(51) Int. Cl.: A47J 41/02, B65D 81/38

(54) **HEAT-INSULATING CONTAINER**
WÄRME ISOLIERENDER BEHÄLTER
RECIPIENT CALORIFUGE

(30) Priority: 20.04.1989 JP 46398/89 U; 21.04.1989 JP 47577/89 U
(43) Date of publication of application: 24.04.1991
(73) Proprietor: Nippon Sanso Kabushiki Kaisha, Minato-ku Tokyo (JP)
(72) Inventor: TOIDA, Shoji Nippon Sanso Kabushiki Kaisha, Minato-ku Tokyo 105 (JP); ITO, Seiichi Nippon Sanso Kabushiki Kaisha, Minato-ku Tokyo 105 (JP); OHTA, Hidetoshi Nippon Sanso Kabushiki Kaisha, Minato-ku Tokyo 105 (JP); ISHIKAWA, Isao Nippon Sanso Kabushiki Kaisha, Minato-ku Tokyo 105 (JP)
(74) Representative: TER MEER STEINMEISTER & PARTNER GbR
(86) International application number: JP9000518
(87) International publication number: WO9012529

(56) References cited:
- JP-U- 615 767
- JP-U-62 146 709
- JP-Y- 60 826
- US-A- 3 263 806

## Description

The present invention relates to a heat-insulating container according to the preamble of claim 1.

A heat-insulating container of such a kind is disclosed in US-A 3 263 806.

Vacuum bottles are widely used to keep various kinds of beverages hot or cold, and stainless portable vacuum bottles having excellent shock resistance recently become popular.

Vacuum bottles are limited in the types of beverages to be filled therein. For instance, since carbonic beverages, such as beer and cola, are not suitable to be directly filled in vacuum bottles, it is necessary to use an icebox when one wants to drink these carbonic beverages cold outdoor.

The heat-insulating property of the icebox is, however, considerably lower than that of vacuum bottles. In addition, due to its large size and heaviness, the icebox is inconvenient to carry around and is particularly unsuitable when there are a few containers, such as beverage cans.

It is therefore an object of the present invention to provide a heat-insulating container which has excellent heat-insulating property and rust resistance and high portability, can keep a few containers, such as beverage cans, cold or hot for a long period of time, and can receive two types of storage containers such as beverage cans with different diameters and heights without being rickety.

This object is achieved by a heat-insulating container according to claim 1.

Therefore, this heat-insulating container can retain one or a plurality of the mentioned storage containers in series in the inner case, can keep a few storage containers cold or hot for a long period of time, and has excellent heat-insulating property and portability. Further, with a large-diameter and long storage container being placed in the inner case of the heat-insulating container, the upper peripheral edge of this storage container, the upper and lower peripheral edges of this storage container abut on the engagement portions of the plug member and of the inner case, respectively, permitting the storage container to be retained without being wobbly. When a small-diameter and high storage container is placed in the inner case, the upper and lower portions of this storage container are fitted in the recesses of the plug member and of the inner case, respectively, permitting the storage container to be held without being rickety. Accordingly, this heat-insulating container can selectively retain the aforementioned large-diameter storage container or small-diameter storage container and has a high general-purpose adaptability. Since the inner case of the heat-insulating container is made of a synthetic resin, even dew drops formed on the outer surface of the storage container would not cause rusting.

Advantageously, the cap of the heat-insulating container comprises a ring for rotatably supporting the plug member and is hinged movably in an axial direction of the ring to a cap mounting member provided at the upper edge of the straight cylindrical container. At the time the storage container is placed in or removed from the heat-insulating container, therefore, the cap would not interfere the action, nor would it come off the heat-insulating container, thus preventing the cap from being lost.

### Brief Description of the Drawings

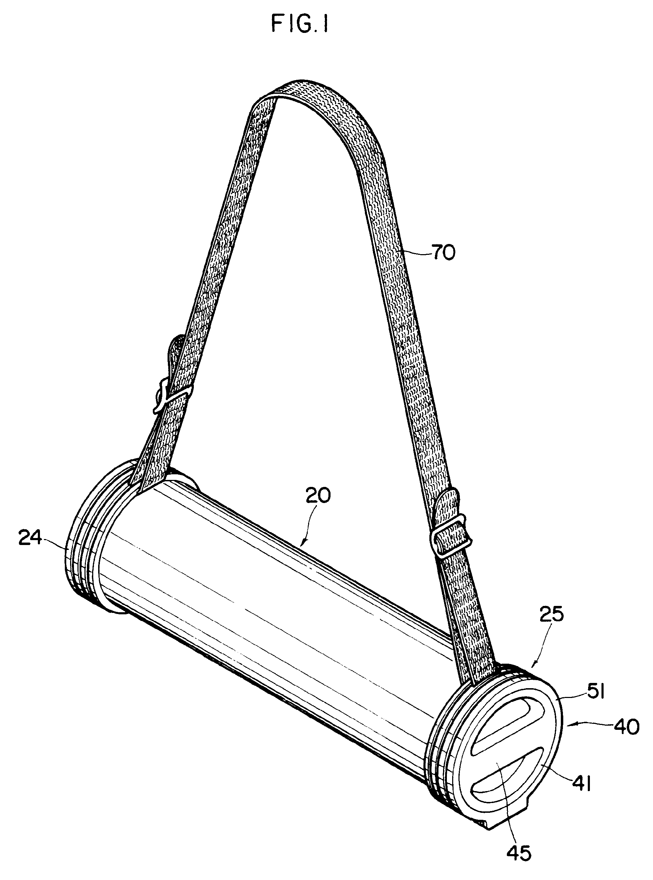

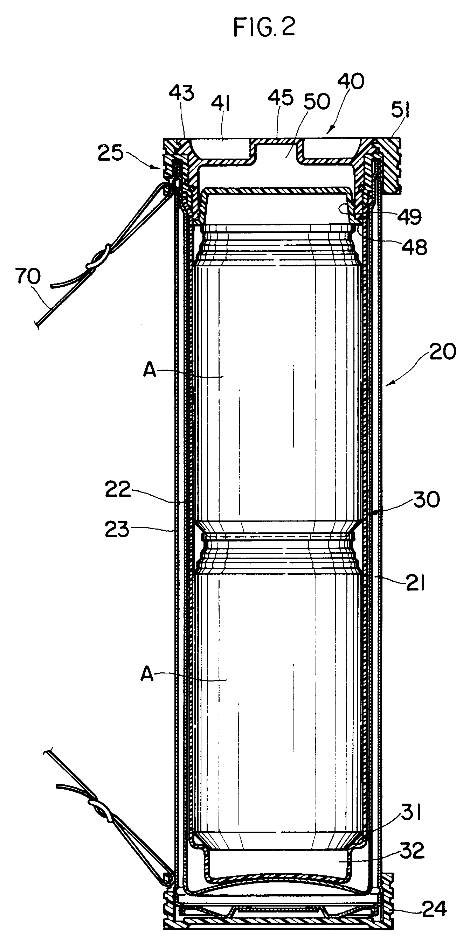

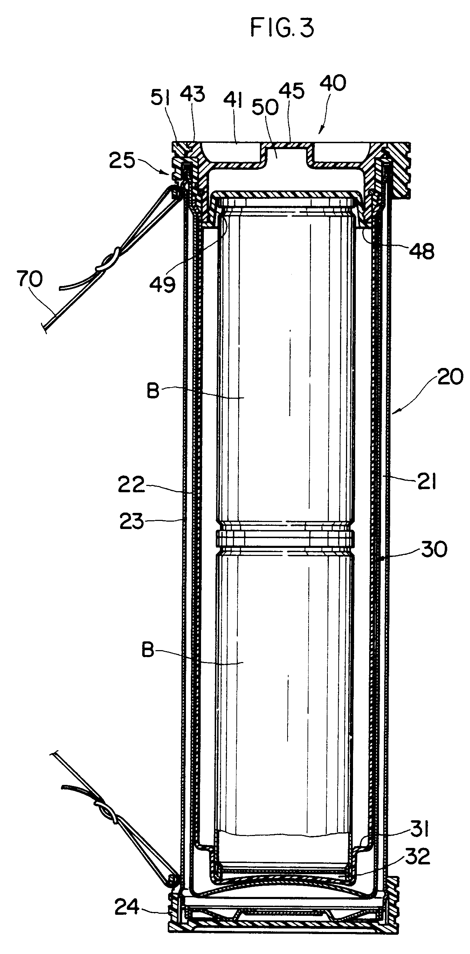

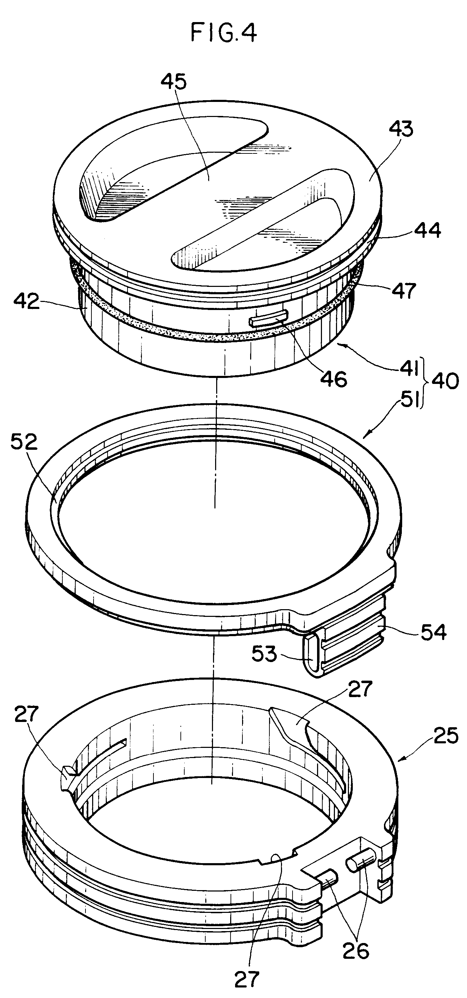

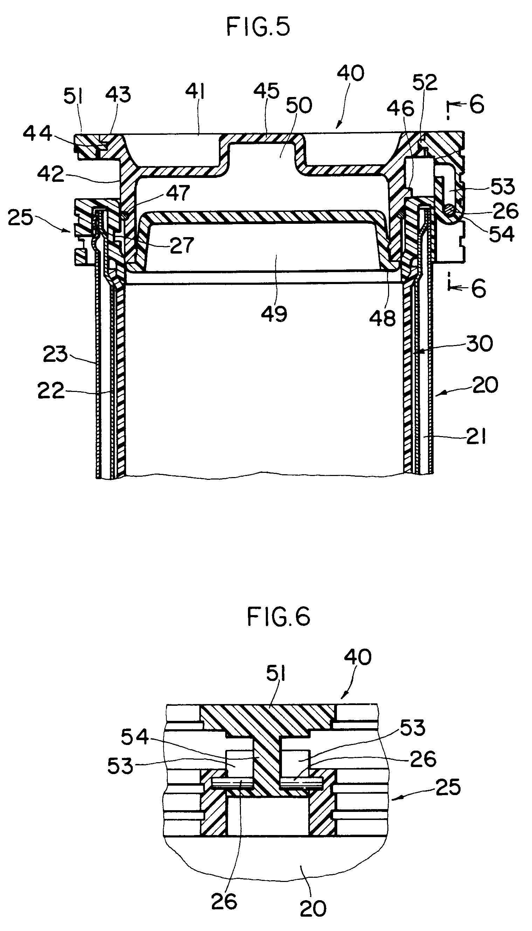

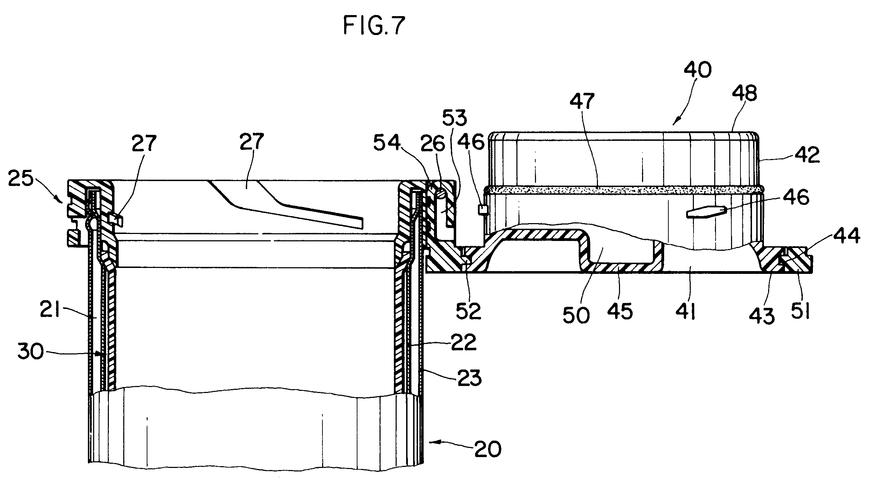

Figs. 1 through 7 illustrate the first embodiment of the present invention. Fig. 1 is a perspective view, Fig. 2 is a front cross section of a heat-insulating container retaining a large-diameter storage container, Fig. 3 is a front cross section of a heat-insulating container retaining a small-diameter storage container, Fig. 4 is an exploded perspective showing a cap and a cap mounting member, Fig. 5 is a cross section of essential portions, illustrating how the cap is mounted, Fig. 6 is a cross section taken along the line 6-6 in Fig. 5, and Fig. 7 is a cross section illustrating the cap being open.

Figs. 8 and 9 illustrate another embodiment of the cap. Fig. 8 is a perspective view, and Fig. 9 is a partly cutaway front cross section.

Fig. 10 is a front cross section of a heat-insulating container illustrating a further embodiment of the cap.

Fig. 11 is a front cross section of a heat-insulating container illustrating the second embodiment of the present invention.

### Best Mode of Carrying Out the Invention

The present invention will now be described in detail referring to the accompanying drawings.

In the following description of the embodiments, beverage cans commercially sold, such as cans of beer, juice and cola, as storage containers filled with stuff which should desirably be kept cold or hot. There are two kinds of storage containers with different diameters and heights respectively: for example, a large-diameter storage container (hereafter referred to as "large-diameter can") is a 350-mℓ can 66 mm in diameter and 123 mm long, and a small-diameter storage container (hereafter referred to as "small-diameter can") is a 250-mℓ can 53 mm in diameter and 133 mm long. These cans are made of an aluminum, coated steel sheet, or metal-plated steel sheet.

The first embodiment of the present invention will now be described referring to Figs. 1 to 7. This embodiment relates to a heat-insulating container which can store two large-diameter cans A or two small-diameter cans B in a series.

The heat-insulating container includes a straight cylindrical container 20 with a heat-insulating layer, a synthetic resin inner case 30 with a wide mouth to be inserted into the cylindrical container 20, and a cap 40 to close the upper opening of the cylindrical container 20.

In the cylindrical container 20, an inner cylinder 22 having a bottom is fitted into an outer cylinder 23 having a bottom, with upper peripheral edges of both cylinders 22 and 23 connected airtight to form a heat-insulating vacuum layer 21 between both cylinders 22 and 23. These cylinders 22 and 23 are made of stainless steel.

A synthetic resin bottom member 24 for protection is fitted over the bottom of the cylindrical container 20. A ring-shaped, synthetic resin cap mounting member 25 is fitted around the upper peripheral edge of the straight cylindrical container 20. Support shafts 26 for hinge-connection of the cap 40 is formed in a tangential direction on the outer wall of the cap mounting member 25. Engage grooves 27 for engagement of the cap 40 are formed at three positions in the internal wall of the cap mounting member 25.

Both ends of a strap 70 are attached detachable to the bottom member 24 and the cap mounting member 25.

The internal case 30 is formed in a cylindrical shape with a bottom, and has at the bottom an engage portion 31 abuts on the lower peripheral edge of the large-diameter can A and a recess 32 where the lower portion of the small-diameter can B is fitted. The edge of the upper opening of the inner case 30 is fitted between the inner cylinder 22 and the cap mounting member 25. The outer diameter of this inner case 30 is substantially the same as the inner diameter of the inner cylinder 22, while the inner diameter of the case 30 is substantially equal to the outer diameter of the large-diameter can A.

The cap 40 comprises a heat-insulating plug member 41 to be fitted in the mouth of the inner case 30, and a ring 51 to support the plug member 41 rotatable. The plug member 41 and the ring 51 are made of a synthetic resin.

The plug member 41 has a flange 43 atop of a body 42, and a peripheral groove 44 formed around the outer wall of the flange 43. A knob 45 is formed on the top of the body 42. Protrusions 46 which engage with the engage grooves 27 are formed at three places on the outer surface of the body 42, and packing 47 is fitted thereon. Further, inside the body 42, there are an engage portion 48, which abuts on the upper peripheral edge of the large-diameter can A, and a recess 49 to receive the upper portion of the small-diameter can B. The plug member 41 has a heat-insulating layer 50 which is hollow, or filled with a heat-insulating material.

On the inner wall of the ring 51 is formed a thread 52 to engage with the peripheral groove 44; the engagement of the thread 52 with the peripheral groove 44 allows the ring 51 to support the plug member 41 rotatable. The ring 51 also includes a U-shaped link portion 54 with a groove 53, which is hinged to the support shafts 26. The groove 53 is so formed that the cap 40 is guided to the support shafts 26 to be movable in the axial direction of the ring.

In opening the cap 40 having the above structure, the plug member 41 in Fig. 4 is turned counterclockwise holding the knob 45, the projections 46 are guided to the engage grooves 27 to raise the plug member 41 and raise the ring 51 accordingly. The cap 40 therefore rises, kept closed as shown in Fig. 5. When the cap 40 is rotated on the support shafts 26 in this state, it can be opened as shown in Fig. 7, thereby permitting the insertion and removable of cans.

To close the cap 40, the operation should be carried out in the reverse order of the above-described one.

When two large-diameter cans A are placed inside the heat-insulating container, the upper peripheral edge of the upper large-diameter can A abuts on the engagement portion 48 of the cap 40 and the bottom peripheral edge of the lower large-diameter can A abuts on the engagement portion 31 of the inner case 30, as shown in Fig. 2, thereby permitting the two large-diameter cans A to be held without being wobbly. The distance between both engagement portions 48 and 31 is designed to be substantially equal to the height of the two large-diameter cans A.

When two small-diameter cans B are placed in the heat-insulating container, the upper portion of the top small-diameter can B is fitted in the recess 49 of the cap 40, and the lower portion of the bottom small-diameter can B is fitted in the recess 32 of the inner case 30, as shown in Fig. 3, so that both small-diameter cans B can be stably held. Therefore, the distance between the bottoms of the recesses 49 and 32 is designed to be substantially the same as the height of the two small-diameter cans B, while the diameters of the recesses 49 and 32 are set substantially equal to the outer diameters of the small-diameter cans B.

There may be only one recess where the small-diameter can B is fitted in.

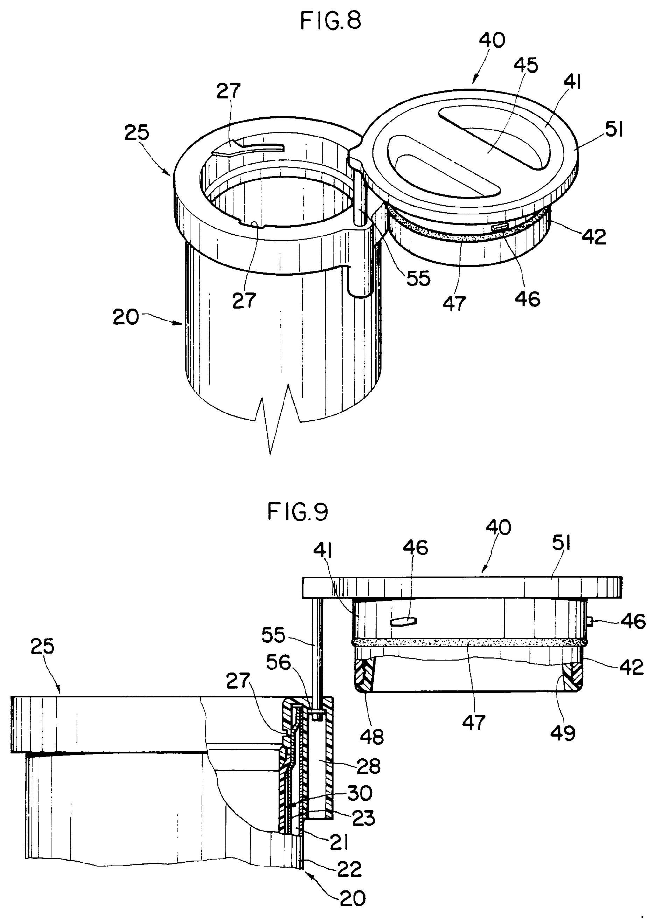

Figs. 8 and 9 illustrate another embodiment of the cap.

The cap 40 in this embodiment, like the cap of the above-described embodiment, includes the heat-insulating plug member 41, which is to be fitted in the mouth of the inner case 30, and the ring 51 to support the plug member portion 41 rotatable. The ring 51 is provided with a support shaft 55 extending in the axial direction of the ring. At the lower end of the support shaft 55 is formed a stopper 56 to prevent the support shaft 55 from falling out.

A support-shaft through hole 28 is formed in the cap mounting member 25, extending in the axial direction thereof. With the support shaft 55 inserted in the through hole 28, the cap 40 can be moved in the axial direction of the ring in the same manner as per the above-described embodiment. The cap 40, therefore, rotates on the support shaft 55 to be opened as shown in Figs. 8 and 9.

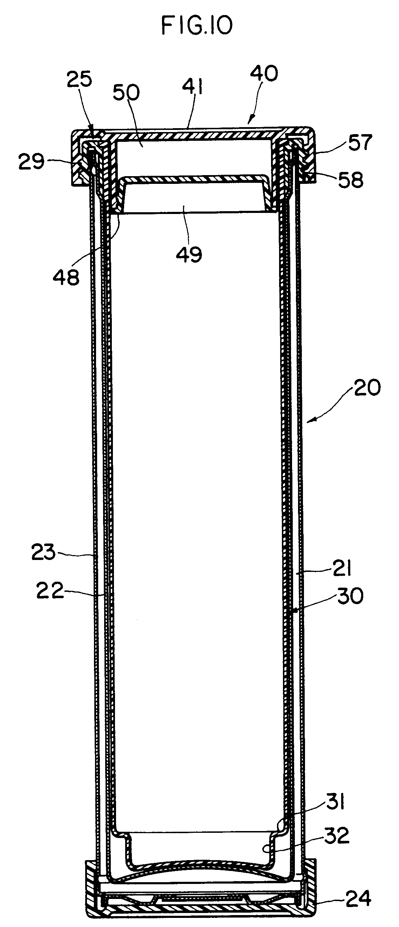

Fig. 10 illustrates a further embodiment of the cap.

The heat-insulating container of this embodiment has the same structure as those of the above-described embodiments, except for the cap mounting structure.

According to this embodiment, the cap 40 has a sleeve 57 formed integral with the plug member 41 which is to be fitted in the mouth of the inner case 30, with an internal thread 58 formed on the sleeve 57. The cap mounting member 25 has an external thread 29 formed to engage with the internal thread 58.

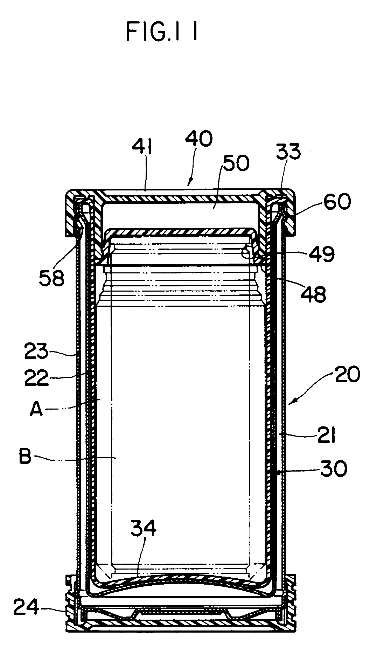

Fig. 11 illustrates a heat-insulating container according to the second embodiment of the present invention.

This embodiment pertains to a heat-insulating container which can retain one large-diameter can A or one small-diameter can B.

This heat-insulating container comprises the straight cylindrical container 20 having an external thread 60 formed around the periphery of the mouth, the synthetic resin inner case 30 with a wide mouth, which is to be fitted in the container 20, and the cap 40 adapted to engage with the external thread 60 to close the upper opening of the container 20.

The straight cylindrical container 20 has the external thread 60 formed on the periphery of the mouth in place of the cap mounting member of the first embodiment, and the other part designed in the same manner as that of the first embodiment.

There is nothing formed at the bottom of the inner case 30, which corresponds to the engagement portion and recess of the first embodiment. The inner case 30 has a flange 33 formed at the edge of the upper mouth, which is engaged with the mouth edge of the straight cylindrical container 20.

The cap 40 is formed in the same as the one shown in Fig. 10, with its internal thread 58 engageable with the external thread 60 of the straight cylindrical container 20.

When one large-diameter can A is placed in the heat-insulating container, the upper peripheral edge of the large-diameter can A abuts on the engagement portion 48 of the cap 40 while the bottom of the large-diameter can A abuts on the bottom wall 34 of the inner case 30, as shown in Fig. 11, thus permitting the large-diameter can A to be stably held. Accordingly, the distance between the engagement portion 48 and the bottom wall 34 is so set as to be substantially equal to the height of one large-diameter can A.

When one small-diameter can B is placed in the heat-insulating container, the upper portion of the small-diameter can B is fitted in the recess 49 of the cap 40 while the bottom of the small-diameter can B abuts on the bottom wall 34 of the inner case 30, thus permitting the small-diameter can B to be stably held. Accordingly, the distance between the bottom wall of the recess 49 and the bottom wall 34 of the inner case 30 is so set as to be substantially equal to the height of one small-diameter can B, and the diameter of the recess 49 is so set as to be substantially equal to the outer diameter of the can B.

The heat-insulating container of the present invention can retain three or more storage containers by properly setting its length.

## Claims

1. A heat-insulating container comprising:
- a straight cylindrical container (20) for retaining one or a plurality of storage containers (A,B) in series, with a heat-insulating layer (21), and
- a heat-insulating cap (40) for closing an upper opening of said straight cylindrical container (20),
**characterized** in that
- said straight cylindrical container (20) comprises a metal inner cylinder (22) with a bottom and a metal outer cylinder (23) with a bottom, said heat-insulating layer (21) being disposed between said inner and outer cylinder (22,23),
- a synthetic resin inner case (30) with a wide mouth is inserted in said straight cylindrical container (20), for selectively retaining one or a plurality of large-diameter storage containers (A) or small-diameter storage containers (B) in series as needed, said inner case (30) having a bottom provided with an engagement portion (31) adapted to abut on a lower peripheral edge of one of said large-diameter storage containers (A) and with a recess (32) where a lower portion of one of said small-diameter storage containers (B) is fitted, and
- said cap (40) comprises a heat-insulating plug member (41) to be fitted in said mouth of the inner case (30), said plug member (41) having an inner surface provided with an engagement portion (48) adapted to abut on an upper peripheral edge of one of said large-diameter storage containers (A) and with a recess (49) where an upper portion of one of said small-diameter storage containers (B) is fitted.

2. A heat-insulating container according to claim 1, **characterized** in that
- said cap (40) comprises a ring (51) for rotatably supporting said plug member (41),
- a cap mounting member (25) is provided on an upper edge of said straight cylindrical container (20),
- a support shaft (26) is provided in a tangential direction on said cap mounting member (25), and
- a link portion (54) to be hinged to said support shaft (26) is provided on said ring (51) and has a groove (53) in which said cap (40) is movable in an axial direction of said ring (51).

3. A heat-insulating container according to claim 1, **characterized** in that
- said cap (40) comprises a ring (51) for rotatably supporting said plug member (41) and a support shaft (55) provided on said ring (51) in an axial direction of said ring (51), and
- a cap mounting member (25) is provided on an upper edge of said straight cylindrical container (20), said support shaft (55) being rotatably attached to said cap mounting member (25) in such a manner that said cap (40) is movable in said axial direction.

## Patentansprüche

1. Wärmeisolierender Behälter mit
- einem geraden, zylindrischen Behälter (20) zur Aufnahme eines oder einer Anzahl von Speicherbehältern (A,B) in Reihe, mit einer wärmeisolierenden Schicht (21), und
- einem wärmeisolierenden Deckel (40) zum Verschließen des oberen Endes des geraden, zylindrischen Behälters (20),
dadurch **gekennzeichnet,** daß
- der gerade, zylindrische Behälter (20) einen metallischen Innenzylinder (22) mit einem Boden und einen metallischen Außenzylinder (23) mit einem Boden umfaßt, wobei die wärmeisolierende Schicht (21) zwischen dem inneren und dem äußeren Zylinder (22,23) angeordnet ist,
- ein inneres Gehäuse (30) aus synthetischem Harz mit einer weiten Öffnung eingefügt ist in den geraden, zylindrischen Behälter (20) zum wahlweisen Halten eines oder einer Anzahl von Speicherbehältern (A) großen Durchmessers oder Speicherbehältern (B) kleinen Durchmessers in Reihe nach Bedarf, welches innere Gehäuse (30) einen Boden aufweist, der mit einem Eingriffsbereich (31) versehen ist, der gegen einen unteren umlaufenden Rand eines der Speicherbehälter (A) großen Durchmessers anschlägt, und mit einer Ausnehmung (32), in die einer der Speicherbehälter (B) kleinen Durchmessers eingreift, und
- welcher Deckel (40) einen wärmeisolierenden Schaft (41) aufweist, der vorgesehen ist zum Eingreifen in die Öffnung des inneren Gehäuses (30), welcher Schaft (41) eine innere Oberfläche aufweist, die mit einem Eingriffsbereich (48) versehen ist, der vorgesehen ist zum Anschlagen gegen den oberen umlaufenden Rand eines der Speicherbehälter (A) mit großem Durchmesser, und mit einer Ausnehmung (49), in die ein oberer Bereich eines der Speicherbehälter (B) kleinen Durchmessers eingreift.

2. Wärmeisolierender Behälter nach Anspruch 1, dadurch **gekennzeichnet**, daß
- der Deckel (40) einen Ring (51) zur drehbaren Abstützung des Schaftes (41 ) umfaßt,
- ein Deckelmontageglied (25) am oberen Rand des geraden, zylindrischen Behälters (20) vorgesehen ist,
- eine Trägerachse (26) in tangentialer Richtung an das Deckelmontageglied (25) angebracht ist, und
- ein Gelenkabschnitt (54), der scharnierförmig mit der Stützachse (26) verbunden ist, an dem Ring (51) vorgesehen ist und eine Nut (53) aufweist, in der der Deckel in Axialrichtung des Ringes (51) beweglich ist.

3. Wärmeisolierender Behälter nach Anspruch 1, dadurch **gekennzeichnet**, daß
- der Deckel (40) einen Ring (51) umfaßt, der den Zapfen (41) drehbar abstützt, und eine Trägerachse (55), die an dem Ring (51) in Axialrichtung des Ringes (51) vorgesehen ist, und
- ein Deckelmontageglied (25) an einem oberen Rand des geraden, zylindrischen Behälters (20) vorgesehen ist, welche Trägerachse (55) drehbar an dem Deckelmontageglied (25) derart angebracht ist, daß der Deckel (40) in Axialrichtung entfernbar ist.

## Revendications

1. Récipient calorifuge comprenant :
- un récipient cylindrique droit (20), pourvu d'une couche calorifuge (21) et destiné à recevoir un ou plusieurs récipients de stockage (A, B) en série, et
- un bouchon calorifuge (40) pour fermer une ouverture supérieure dudit récipient cylindrique droit (20),
**caractérisé** en **c**e **q**ue
- ledit récipient cylindrique droit (20) comprend un cylindre métallique intérieur (22) pourvu d'un fond et un cylindre métallique extérieur (23) pourvu d'un fond, ladite couche calorifuge (21) étant disposée entre lesdits cylindres intérieur et extérieur (22, 23),
- une enveloppe intérieure (30), en résine synthétique et à large embouchure, est insérée dans ledit récipient cylindrique droit (20) pour recevoir au choix, selon les besoins, un ou plusieurs récipients de stockage de grand diamètre (A) ou récipients de stockage de petit diamètre (B), en série, ladite enveloppe intérieure (30) possédant un fond doté d'une partie d'engagement (31) adaptée pour buter contre un bord périphérique inférieur d'un desdits récipients de stockage de grand diamètre (A), et d'un renfoncement (32) dans lequel s'adapte une partie inférieure d'un desdits récipients de stockage de petit diamètre (B), et
- ledit bouchon (40) comprend un élément d'obturation calorifuge (41) à adapter dans l'embouchure de ladite enveloppe intérieure (30), ledit élément d'obturation (41) possédant une surface intérieure dotée d'une partie d'engagement (48) adaptée pour buter contre un bord périphérique supérieur d'un desdits récipients de stockage de grand diamètre (A), et d'un renfoncement (49) dans lequel s'adapte une partie supérieure d'un desdits récipients de stockage de petit diamètre (B).

2. Récipient calorifuge selon la revendication 1, **caractérisé** en **c**e **q**ue
- ledit bouchon (40) comprend une bague (51) pour supporter à rotation ledit élément d'obturation (41),
- un élément de montage de bouchon (25) est prévu sur un bord supérieur dudit récipient cylindrique droit (20),
- un axe de support (26) est prévu en direction tangentielle sur ledit élément de montage de bouchon (25), et
- une partie de liaison (54), à articuler à la manière d'une charnière sur ledit axe de support (26), est prévue sur ladite bague (51) et possède une gorge (53) dans laquelle ledit bouchon (40) est mobile dans la direction axiale de ladite bague (51).

3. Récipient calorifuge selon la revendication 1, **caractérisé** en ce que
- ledit bouchon (40) comprend une bague (51) pour supporter à rotation ledit élément d'obturation (41), et un axe de support (55) prévu sur ladite bague (51) dans la direction axiale de ladite bague (51), et
- un élément de montage de bouchon (25) est prévu sur un bord supérieur dudit récipient cylindrique droit (20), ledit axe de support (55) étant fixé à rotation dans ledit élément de montage de bouchon (25) de telle sorte que ledit bouchon (40) est mobile dans ladite direction axiale.
